(19) **Europäisches Patentamt**
European Patent Office
Office européen des brevets

(11) **EP 2 327 894 B1**

(12) **EUROPÄISCHE PATENTSCHRIFT**

(45) Veröffentlichungstag und Bekanntmachung des Hinweises auf die Patenterteilung:
**23.05.2012 Patentblatt 2012/21**

(51) Int Cl.:
*F16C 19/20* (2006.01)  *F16C 33/32* (2006.01)
*F16C 33/37* (2006.01)

(21) Anmeldenummer: **10191851.4**

(22) Anmeldetag: **19.11.2010**

(54) **Wälzlager mit beschichteten Wälzkörpern unterschiedlicher Durchmesser**

Roller bearing with coated rollers with different diameters

Palier à roulement aux rouleaux revêtus avec des diametres variables

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2009 DE 102009055653**

(43) Veröffentlichungstag der Anmeldung:
**01.06.2011 Patentblatt 2011/22**

(73) Patentinhaber: **Schaeffler Technologies AG & Co. KG**
**91074 Herzogenaurach (DE)**

(72) Erfinder:
• **Weber, Jörg**
  **91301 Forchheim (DE)**
• **Hosenfeldt, Tim Matthias**
  **90480 Nürnberg (DE)**
• **Bakolas, Vasilios**
  **91074 Herzogenaurach (DE)**

(56) Entgegenhaltungen:
**DE-A1- 1 906 636**     **JP-A- 7 145 820**
**JP-A- 9 166 133**     **US-A1- 2003 138 173**
**US-A1- 2004 223 670**

EP 2 327 894 B1

**Beschreibung**

**Gebiet der Erfindung**

Die Erfindung betrifft ein Wälzlager mit einer Anzahl zwischen einem Innen- und Außenring wälzenden ersten und zweiten Wälzkörpern, wobei die ersten Wälzkörper im Vergleich mit den zweiten Wälzkörpern einen vergrößerten Durchmesser aufweisen und wobei zumindest die ersten Wälzkörper Kontaktbereiche wenigstens zu dem Innen- und Außenring ausbilden.

**Hintergrund der Erfindung**

Wälzlager sind in verschiedenen Ausgestaltungen bekannt und finden in den unterschiedlichsten Bereichen des Maschinenbaus zur Lagerung beweglicher Teile Verwendung. Ein Wälzlager besteht im Allgemeinen aus zwei Lagerringen, die je nach Ausgestaltung als Innen- und Außenring oder als axiale scheibenförmige Lagerringe konzipiert sind. Zwischen diesen laufen Wälzkörper, beispielsweise in Form von Rollen, Nadeln, Kugeln, Kegeln oder Tonnen, die üblicherweise in einem Käfig gefasst sind. Die Lagerringe sowie die Wälzkörper sind in der Regel aus Metall gefertigt, häufig wird hierbei konventioneller Wälzlagerstahl wie z. B. 100Cr6 und verwandte Stahllegierungen, die je nach Einsatzzweck einer thermischen Behandlung unterzogen werden, eingesetzt. Der Aufbau von Wälzlagern sowie die hierfür verwendeten Materialien sind dem Fachmann hinlänglich bekannt.

Ein Problem bei Wälzlagern ist immer wieder gegeben, wenn die Betriebslast unter ein gewisses Niveau fällt und die Wälzkörper in der Lastzone sich nicht abwälzen sondern teilweise gleiten. Durch diesen Schlupf zwischen Wälzkörpern und Ringen kommt es zu Schäden, die zu einem frühzeitigen Lagerausfall führen. Aus diesem Grund ist es bekannt, Wälzkörper mit unterschiedlichen Durchmessern vorzusehen und zumindest teilweise unter Vorspannung zwischen den Lagerringen aufzunehmen. Infolge der Vorspannung kommt es zwangsläufig zu einer synchronen Bewegung zwischen Lagerring und Wälzkörper, da die gegebenenfalls in einem Käfig aufgenommenen Wälzkörper derart stets in Kontakt zu den Lagerringen stehen.

Ein gattungsgemäßes Wälzlager ist aus JP 407145820 A bekannt und zeigt ein Wälzlager mit Wälzkörpern unterschiedlichen Nominaldurchmessers. Im unbelasteten Zustand des Kugelgewindegetriebes haben die Wälzkörper geringeren Durchmessers eine Trennfunktion inne und sind zum Abrollen auf jeweils benachbarten Wälzkörpern größeren Durchmessers, diese auf Abstand haltend, angeordnet. Im belasteten Zustand übernehmen die kleineren Wälzkörper zusätzlich zu den größeren Wälzkörpern ebenfalls eine Tragfunktion.

Es ist für den Fachmann ersichtlich und bekannt, dass der Einsatz von Wälzkörpern mit einem vergrößerten Durchmesser und Lagerung dieser unter Vorspannung zu einer erhöhten Belastung und im Weiteren zu stärkeren Verschleißerscheinungen und frühzeitiger Wälzermüdung führt.

**Zusammenfassung der Erfindung**

Der Erfindung liegt das Problem zugrunde, ein gegenüber dem Stand der Technik verbessertes Wälzlager anzugeben.

Dieses Problem wird erfindungsgemäß durch ein Wälzlager wie in Anspruch 1 beschrieben gelöst, welches sich dadurch auszeichnet, dass die Härte der Beschichtung vergleichbar mit der Härte der Komponenten des Wälzkörpers ist.

Hierdurch ist erfindungsgemäß gewährleistet, dass es durch größere Härteunterschiede zwischen der Beschichtung und den Wälzlagerkomponenten nicht zu erhöhten Reibungs- und Verschleißerscheinungen kommt. Insbesondere kann somit einem abrasiven Materialabtrag der härteren Komponente auf der weicheren Komponente entgegengewirkt werden.

Die Steifigkeit der Beschichtungt liegt unterhalb der Steifigkeit der Komponenten des Wälzlagers. Die Steifigkeit lässt sich insbesondere über den E-Modul feststellen, wobei im Rahmen der Erfindung der E-Modul der Beschichtung geringer ist als der jeweilige E-Modul der Wälzlagerkomponenten. Mit anderen Worten ist die Beschichtung also aus einem weniger steifen beziehungsweise zäheren Material als die Wälzlagerkomponenten.

Durch die abschnittsweise zumindest im Bereich der Kontaktbereiche wenigstens der ersten Wälzkörper aufgebrachte Beschichtung werden diese vor Reibungs- und Verschleißerscheinungen geschützt. Selbstverständlich ist es dabei auch denkbar, wenn dies z. B. aus wirtschaftlichen Erwägungen sinnvoll erscheint, die ersten Wälzkörper nicht nur im Bereich ihrer Kontaktbereiche, sondern komplett mit der Beschichtung zu versehen. Gegebenenfalls können gleichermaßen auch die zweiten Wälzkörper wenigstens im Bereich ihrer Kontaktbereiche, welche insbesondere auch als Laufflächen zu verstehen sind, mit einer Beschichtung beschichtet sein.

Bezüglich der Ausführung des Wälzlagers wird grundsätzlich angemerkt, dass die Erfindung jede Art und Größe von Wälzlagern betrifft, lediglich beispielhaft seien hier besonders gängige Wälzlager wie Kugel- oder Rollenlageranordnungen genannt. Die Wälzkörper, die entsprechend der Vielzahl an Ausgestaltungsmöglichkeiten der Wälzlager in entsprechend unterschiedlichen Ausführungen vorliegen können, können gegebenenfalls in einem Käfig geführt sein. Als Materialien der Komponenten des Wälzlagers können grundsätzlich bekannte metallische Werkstoffe wie z. B. Edelstähle oder Lagerstähle zum Einsatz kommen. Selbstverständlich sind hiervon Ausnahmen denkbar. Zur Aufbringung der Beschichtung auf den jeweiligen Kontaktbereich können sämtliche aus dem Stand der Technik bekannte Möglichkeiten der Beschichtung von Lagerkomponenten angewendet werden.

Die Kontaktbereiche können sich über eine Kontaktlänge erstrecken. Bei einem Kontaktbereich handelt es sich im Allgemeinen um eine zweidimensionale Fläche, aufweisend eine Länge und eine Breite, wobei im Folgenden lediglich die Länge des Kontaktbereichs beziehungsweise der Kontaktfläche von Belang ist.

In einer weiteren Ausgestaltung der Erfindung kann die Schichtdicke der Beschichtung in Abhängigkeit der Kontaktlänge zwischen dem jeweiligen Wälzkörper und dem Innen- und/oder Außenring festgelegt sein. Die Schichtdicke der Beschichtung ist demnach nicht frei wählbar, sondern bezieht sich konkret auf die jeweilige Kontaktlänge zwischen einem gegebenen Wälzkörper und einem Innen- und/oder Außenring des Wälzlagers. Wie sich die Kontaktlänge bestimmen lässt und aus welchen Faktoren diese zusammengesetzt ist, wird später näher betrachtet.

Die Schichtdicke der Beschichtung kann erfindungsgemäß aus einem feststehenden Verhältnis von Schichtdicke zu halber Kontaktlänge ermittelt werden. Durch das feststehende Verhältnis von Schichtdicke zu halber Kontaktlänge wird eine Proportionalität zwischen diesen beiden Größen hergestellt, wonach sich also z. B. eine Vergrößerung der Kontaktlänge auch in einer entsprechenden Vergrößerung der Schichtdicke widerspiegeln muss.

Vorteilhaft liegt das Verhältnis von Schichtdicke zu halber Kontaktlänge zwischen 0,1 und 1, besonders bevorzugt oberhalb von 0,5. Hieraus ergibt sich, dass die Schichtdicke zweckmäßigerweise mindestens ein Zehntel der halben Kontaktlänge beträgt. Als besonders vorteilhaft hat es sich dabei erwiesen, wenn die Schichtdicke gerade die Hälfte der halben Kontaktlänge, also ein Viertel der Kontaktlänge, beträgt. Natürlich können auch andere Verhältnisse von Schichtdicke zu halber Kontaktlänge, insbesondere kleiner als 0,1 und größer als 1, gewählt werden, wobei sich aber die positiven Effekte insbesondere in dem genannten Intervall von 0,1 - 1,0 ergeben.

Die Beschichtung ist bevorzugt eine metallische Beschichtung, insbesondere eine Chrombeschichtung. Beispielhaft sei eine Hartchromschicht angeführt. Natürlich können auch alle anderen Beschichtungen verwendet werden, die die oben genannten Anforderungen erfüllen, wie z. B. Kunststoff-Metall-Composite-Beschichtungen.

In Weiterbildung der Erfindung ist es ferner vorgesehen, dass die ersten Wälzkörper zwischen Innen- und Außenring unter Vorspannung gelagert sind. Derart kann sichergestellt werden, dass die "Stick-Slip-Effekte" bzw. "Wälzkörper-Schlupf"-Effekte reduziert bzw. ausgeschlossen werden können. Sonach ist durch diese Maßnahme eine synchrone Bewegung zwischen dem Innen- bzw. Außenring und den ersten Wälzkörpern gegeben. Natürlich ist es auch denkbar, die zweiten Wälzkörper ebenfalls zwischen Innen- und Außenring unter Vorspannung zu lagern, wobei sich bezüglich des Durchmessers immer noch ein Unterschied zwischen den ersten und den zweiten Wälzkörpern ergibt.

Die ersten Wälzkörper können gleichmäßig über den Umfang des Wälzlagers verteilt sein. Mit dieser Anordnung ist ein besonders gutes Laufverhalten des Wälzlagers zu erreichen. Grundsätzlich ist es möglich, die unterschiedlichsten Anzahlen an ersten und zweiten Wälzkörpern zwischen dem Lagerinnen- und Lageraußenring anzuordnen, wobei eine Festlegung auf eine bestimmte Anzahl stets in Abhängigkeit der Dimensionierung sowohl der jeweiligen Wälzkörper als auch des Wälzlagers an sich steht.

Eine Möglichkeit, die Wälzkörper zu verteilen, sieht vor, dass mindestens ein zweiter Wälzkörper zwischen zwei ersten Wälzkörpern angeordnet ist. Somit ergibt sich mithin also eine abwechselnde, benachbarte Anordnung von ersten und zweiten Wälzkörpern, wobei die Anzahl an zweiten Wälzkörpern, die sich zwischen zwei ersten Wälzkörpern befindet, beliebig sein kann.

Es können gegebenenfalls zusätzlich zu den ersten und zweiten Wälzkörpern weitere Wälzkörper vorgesehen sein, wobei deren Durchmesser unterhalb des Durchmessers der zweiten Wälzkörper liegt. Hiervon sind Wälzlager betroffen, die zwischen den Lagerringen mindestens drei sich in ihrem Durchmesser unterscheidende Wälzkörper aufweisen. Gegebenenfalls können natürlich auch vierte oder fünfte Wälzkörper vorgesehen sein, wobei gegeben ist, dass der Durchmesser der Wälzkörper ausgehend von den ersten Wälzkörpern stets abnimmt, die ersten Wälzkörper also größer als die zweiten Wälzkörper, diese größer als die dritten Wälzkörper, und so fort, sind.

Bezüglich der Anordnung der weiteren Wälzkörper beinhaltet ein anderer vorteilhafter Aspekt der Erfindung, dass mindestens ein weiterer Wälzkörper zwischen zwei zweiten Wälzkörpern angeordnet ist. Demgemäß sind die weiteren Wälzkörper bevorzugt benachbart zu den zweiten Wälzkörpern und grundsätzlich nicht benachbart zu den ersten Wälzkörpern platziert.

Innerhalb des Wälzlagers muss nicht eine einheitliche Schichtdicke vorliegen, vielmehr kann die Beschichtung auf verschiedenen Wälzlagerkomponenten unterschiedlich dick aufgetragen sein.

**Kurze Beschreibung der Zeichnung**

Ein Ausführungsbeispiel der Erfindung ist in der Zeichnung dargestellt und wird im Folgenden näher beschrieben: Es zeigen:

Figur 1    ein erfindungsgemäßes Wälzlager,

Figur 2    einen Ausschnitt aus einem erfindungsgemäßen Wälzlager, und

Figur 3    eine Prinzipdarstellung eines Kontaktbereichs.

**Ausführliche Beschreibung der Zeichnung**

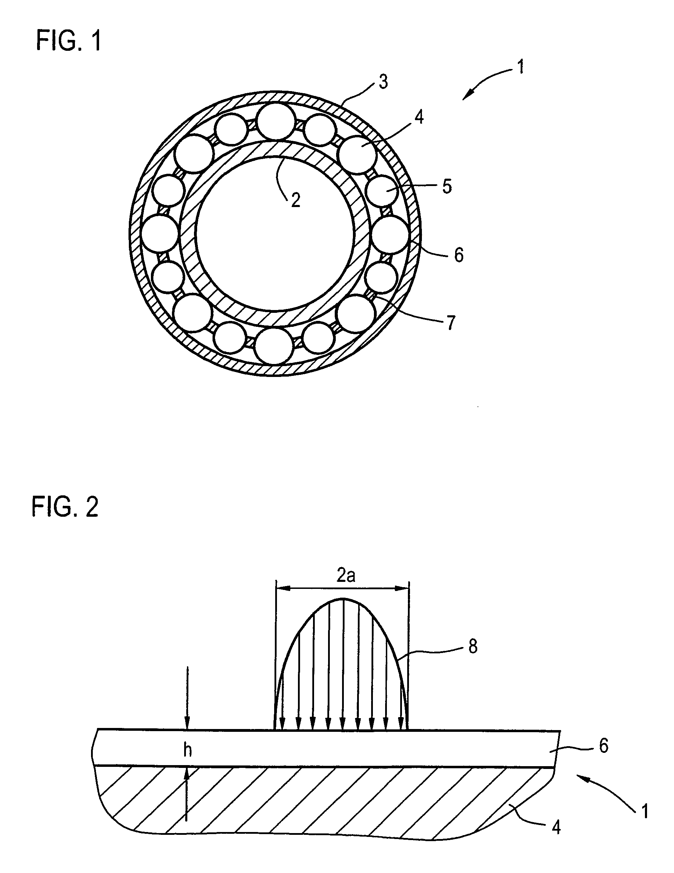

In Figur 1 ist ein Wälzlager 1 mit zwischen einem Innenring 2 und einem Außenring 3 wälzenden ersten Wälzkörpern 4 und zweiten Wälzkörpern 5 dargestellt. Ersichtlich weisen die ersten Wälzkörper 4 im Vergleich zu den zweiten Wälzkörpern 5 einen vergrößerten Durchmesser auf. Der Durchmesser der ersten Wälzkörper 4 ist größer als der sich zwischen Innenring 2 und Außenring 3 befindliche Spaltraum, wodurch sich eine Lagerung der ersten Wälzkörper 4 unter Vorspannung ergibt. Die ersten Wälzkörper 4 sind gleichmäßig über den Umfang des Wälzlagers 1 verteilt. Jeweils ein zweiter Wälzkörper 5 ist zwischen zwei ersten Wälzkörpern 4, benachbart zu diesen, angeordnet. Weitere Wälzkörper, deren Durchmesser unterhalb des Durchmessers der zweiten Wälzkörper 5 liegt, sind in diesem Ausführungsbeispiel nicht vorgesehen, können aber eingereiht werden.

Die ersten Wälzkörper 4 sind auf ihren Kontaktbereichen zu dem Innen- und Außenring 2, 3 mit einer Beschichtung 6 niedriger Steifigkeit (z. B. in Form einer Hartchrombeschichtung) beschichtet, deren Steifigkeit unterhalb der Steifigkeit der übrigen Wälzlagerkomponenten, also z. B. des Innen- bzw. Außenrings 2, 3 liegt. Die Härte der Beschichtung 6 ist vergleichbar mit der Härte der Wälzlagerkomponenten. Über einen Käfig 7 sind die ersten und zweiten Wälzkörper 4, 5 voneinander beabstandet, so dass sich kein direkter Kontakt zwischen diesen ergibt. Der Käfig 7 ist jedoch nicht zwingend erforderlich. Die Wälzkörper 4, 5 und die Lagerringe 2, 3 sind aus einem gängigen metallischen Werkstoff, nämlich einem Lagerstahl 100Cr6, gefertigt.

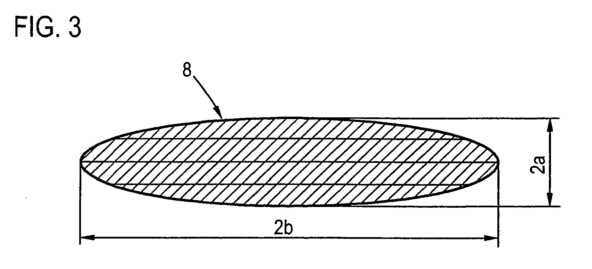

In Figur 2 ist ein erster Wälzkörper 4, der hier ebenso nur ausschnittsweise dargestellt ist, mit einer Beschichtung 6, deren Schichtdicke h in Abhängigkeit der Kontaktlänge 2a bestimmt ist, beschichtet. Eine Kontaktfläche bzw. ein Kontaktbereich zwischen zwei Wälzkontaktpartneren, hier gegeben durch den ersten Wälzkörper 4 und beispielsweise einen nicht gezeigten Lageraußenring 3, ergibt sich aus dem Produkt der Kontaktlänge 2a mit der Kontaktbreite 26. Figur 2 zeigt in zweidimensionaler Darstellung einen typischen Lastverlauf in Form eines Ellipsoids 8. Figur 3 zeigt eine Prinzipdarstellung eines Kontaktbereichs in Form eines Ellipsoids 8. Die dargestellte, den Kontaktbereich bildende Fläche setzt sich aus der Kontaktlänge 2a und der Kontaktbreite 2b zusammen. Wie eingangs erwähnt, ist die Kontaktbreite 2b für die Festlegung der Schichtdicke h jedoch nicht von Belang und wird somit im Weiteren vernachlässigt.

Die jeweilige Form des Lastverlaufs, hier des Ellipsoids 8, ist im Wesentlichen beeinflusst durch geometriespezifische Faktoren, die sich aus Form und Art des Wälzlagers 1 ergeben, und lastspezifische Faktoren, die weitgehend von Betriebs- bzw. Einsatzparametern, insbesondere der wirkenden Kräfte, des Wälzlagers 1 abhängen. Mit anderen Worten ist die Kontaktlänge 2a des hier gezeigten Kontaktbereichs des ersten Wälzkörpers 4 eine Funktion der Geometrie des ersten Wälzkörpers 4 und der auf diesen wirkenden Kraft. Hieraus folgt, dass bei einer Änderung der Geometrie des ersten Wälzkörpers 4 beziehungsweise der auf diesen einwirkenden Kraft sich eine Änderung der Kontaktlänge 2a ergibt. Sonach ist auch verständlich, dass die Beschichtung 6 auf verschiedenen Wälzlagerkomponenten in unterschiedlichen Schichtdicken h vorliegt, da diese jeweils unterschiedliche Geometrien aufweisen bzw. auf diese unterschiedliche Kräfte einwirken können.

Entsprechend der Formel $x = \frac{h}{a}$ , wonach die Schichtdicke h sich aus einem feststehenden Verhältnis x der Schichtdicke h zur halben Kontaktlänge a ergibt, ist in Figur 2 eine Beschichtung 6 der Schichtdicke h auf einen ersten Wälzkörper 4 mit einem feststehenden Verhältnis x der Schichtdicke h zur halben Kontaktlänge a von etwa 0,5 aufgetragen.

Im in Figur 1 gezeigten Ausführungsbeispiel wäre demnach die Schichtdicke h der Beschichtung 6 auf den ersten Wälzkörpern 4 unterschiedlich zu der Schichtdicke h auf den gegebenenfalls ebenso beschichteten zweiten Wälzkörpern 5, da deren Durchmesser unterhalb des Durchmessers der ersten Wälzkörper 4 liegt, woraus sich zwangsläufig eine andere Kontaktfläche und somit auch eine andere Kontaktlänge 2a ergibt.

Gegebenenfalls können natürlich auch die außen liegenden Flächen des Innenrings 2 bzw. des Außenrings 3 mit der Beschichtung 6 beschichtet sein, wobei deren Schichtdicke h wiederum in Abhängigkeit der Kontaktlänge 2a des jeweiligen Kontaktbereichs und weiter gemäß einem feststehenden Verhältnis x von Schichtdicke h zu halber Kontaktlänge a definiert ist.

**Bezugszahlenliste**

| | |
|---|---|
| 1 | Wälzlager |
| 2 | Innenring |
| 2a | Kontaktlänge |
| 2b | Kontaktbreite |
| 3 | Außenring |
| 4 | Wälzkörper |
| 5 | Wälzkörper |
| 6 | Beschichtung |
| 7 | Käfig |
| 8 | Ellipsoid |

Schichtdicke h
Verhältnis x
halbe Kontaktlänge a

**Patentansprüche**

**1.** Wälzlager mit einer Anzahl zwischen einem Innen- und Außenring wälzenden ersten und zweiten Wälzkörpern, wobei die Komponenten des Wälzlagers, nämlich der Innen- und der Außenring sowie die ersten und zweiten Wälzköroper, aus Metall sind, wobei die ersten Wälzkörper im Vergleich mit den zweiten Wälzkörpern einen vergrößerten Durchmesser aufweisen und wobei zumindest die ersten Wälzkörper Kontaktbereiche wenigstens zu dem Innen- und Außenring ausbilden, wobei zumindest die ersten Wälzkörper (4) wenigstens im Bereich ihrer Kontaktbereiche wenigstens abschnittsweise mit einer Beschichtung (6) beschichtet sind, wobei die Steifigkeit der Beschichtung (6) unterhalb der Steifigkeit der Komponenten des Wälzlagers (1) liegt, **dadurch gekennzeichnet, daß** die Härte der Beschichtung (6) vergleichbar mit der Härte der Komponenten des Wälzlagers (1) ist.

2. Wälzlager nach Anspruch 1, **dadurch gekennzeichnet, dass** sich die Kontaktbereiche über eine Kontaktlänge (2a) erstrecken.

3. Wälzlager nach Anspruch 2, **dadurch gekennzeichnet, dass** die Schichtdicke (h) der Beschichtung (6) in Abhängigkeit der Kontaktlänge (2a) zwischen dem jeweiligen Wälzkörper (4, 5) und dem Innen- und/oder Außenring (2, 3) festgelegt ist.

4. Wälzlager nach Anspruch 3, **dadurch gekennzeichnet, dass** sich die Schichtdicke (h) der Beschichtung (6) aus einem feststehenden Verhältnis (x) von Schichtdicke (h) zu halber Kontaktlänge (a) ergibt.

5. Wälzlager nach Anspruch 4, **dadurch gekennzeichnet, dass** das Verhältnis (x) von Schichtdicke (h) zu halber Kontaktlänge (a) zwischen 0,1 und 1, vorzugsweise oberhalb von 0,5, liegt.

6. Wälzlager nach einem der vorangehenden Ansprüche, **dadurch gekennzeichnet, dass** die Beschichtung (6) eine metallische Beschichtung, insbesondere eine Chrombeschichtung, ist.

7. Wälzlager nach einem der vorangehenden Ansprüche, **dadurch gekennzeichnet, dass** die ersten Wälzkörper (4) zwischen Innen- und Außenring (2, 3) unter Vorspannung gelagert sind.

8. Wälzlager nach einem der vorangehenden Ansprüche, **dadurch gekennzeichnet, dass** die ersten Wälzkörper (4) gleichmäßig über den Umfang des Wälzlagers (1) verteilt sind.

9. Wälzlager nach einem der vorangehenden Ansprüche, **dadurch gekennzeichnet, dass** mindestens ein zweiter Wälzkörper (5) zwischen zwei ersten Wälzkörpern (4) angeordnet ist.

10. Wälzlager nach einem der vorangehenden Ansprüche, **dadurch gekennzeichnet, dass** zusätzlich zu den ersten und zweiten Wälzkörpern (4, 5) weitere Wälzkörper vorgesehen sind, deren Durchmesser unterhalb des Durchmessers der zweiten Wälzkörper (5) liegt.

11. Wälzlager nach Anspruch 10 **dadurch gekennzeichnet, dass** mindestens ein weiterer Wälzkörper zwischen zwei zweiten Wälzkörpern (5) angeordnet ist.

12. Wälzlager nach einem der vorangehenden Ansprüche, **dadurch gekennzeichnet, dass** die Beschichtung (6) auf verschiedenen Komponenten des Wälzlagers (1) in unterschiedlichen Schichtdicken (h) vorliegt.

**Claims**

1. Anti-friction bearing having a number of first and second rolling bodies which roll between an inner and outer ring, the components of the anti-friction bearing, namely the inner and the outer ring and the first and second rolling bodies, being made from metal, the first rolling bodies having an increased diameter in comparison with the second rolling bodies, and at least the first rolling bodies forming contact regions at least to the inner and outer ring, at least the first rolling bodies (4) being coated at least in sections with a coating (6), at least in the region of their contact regions, the rigidity of the coating (6) lying below the rigidity of the components of the anti-friction bearing (1), **characterized in that** the hardness of the coating (6) is comparable with the hardness of the components of the anti-friction bearing (1).

2. Anti-friction bearing according to Claim 1, **characterized in that** the contact regions extend over a contact length (2a).

3. Anti-friction bearing according to Claim 2, **characterized in that** the layer thickness (h) of the coating (6) is fixed as a function of the contact length (2a) between the respective rolling body (4, 5) and the inner and/or outer ring (2, 3).

4. Anti-friction bearing according to Claim 3, **characterized in that** the layer thickness (h) of the coating (6) results from a fixed ratio (x) of layer thickness (h) to half the contact length (a).

5. Anti-friction bearing according to Claim 4, **characterized in that** the ratio (x) of layer thickness (h) to half the contact length (a) lies between 0.1 and 1, preferably above 0.5.

**6.** Anti-friction bearing according to one of the preceding claims, **characterized in that** the coating (6) is a metallic coating, in particular a chromium coating.

**7.** Anti-friction bearing according to one of the preceding claims, **characterized in that** the first rolling bodies (4) are mounted under prestress between the inner and outer ring (2, 3).

**8.** Anti-friction bearing according to one of the preceding claims, **characterized in that** the first rolling bodies (4) are distributed uniformly over the circumference of the anti-friction bearing (1).

**9.** Anti-friction bearing according to one of the preceding claims, **characterized in that** at least one second rolling body (5) is arranged between two first rolling bodies (4).

**10.** Anti-friction bearing according to one of the preceding claims, **characterized in that**, in addition to the first and second rolling bodies (4, 5), further rolling bodies are provided, the diameter of which lies below the diameter of the second rolling bodies (5).

**11.** Anti-friction bearing according to Claim 10, **characterized in that** at least one further rolling body is arranged between two second rolling bodies (5).

**12.** Anti-friction bearing according to one of the preceding claims, **characterized in that** the coating (6) is present in different layer thicknesses (h) on various components of the anti-friction bearing (1).

**Revendications**

**1.** Palier à roulement comprenant une pluralité de premiers et deuxièmes corps de roulement roulant entre une bague interne et une bague externe, les composants du palier à roulement, à savoir la bague interne et la bague externe ainsi que les premiers et deuxièmes corps de roulement, étant en métal, les premiers corps de roulement présentant un plus grand diamètre que les deuxièmes corps de roulement, au moins les premiers corps de roulement constituant des régions de contact au moins avec la bague interne et la bague externe, au moins les premiers corps de roulement (4) étant revêtus au moins en partie d'un revêtement (6) au moins dans la région de leurs régions de contact, et la rigidité du revêtement (6) étant inférieure à la rigidité des composants du palier à roulement (1), **caractérisé en ce que** la dureté du revêtement (6) est comparable à la dureté des composants du palier à roulement (1).

**2.** Palier à roulement selon la revendication 1, **caractérisé en ce que** les régions de contact s'étendent sur une longueur de contact (2a).

**3.** Palier à roulement selon la revendication 2, **caractérisé en ce que** l'épaisseur de couche (h) du revêtement (6) est établie en fonction de la longueur de contact (2a) entre le corps de roulement respectif (4, 5) et la bague intérieure et/ou extérieure (2, 3).

**4.** Palier à roulement selon la revendication 3, **caractérisé en ce que** l'épaisseur de couche (h) du revêtement (6) est obtenue à partir d'un rapport (x) fixe de l'épaisseur de couche (h) à la moitié de la longueur de contact (a).

**5.** Palier à roulement selon la revendication 4, **caractérisé en ce que** le rapport (x) de l'épaisseur de couche (h) à la moitié de la longueur de contact (a) est compris entre 0,1 et 1, de préférence est supérieur à 0,5.

**6.** Palier à roulement selon l'une quelconque des revendications précédentes, **caractérisé en ce que** le revêtement (6) est un revêtement métallique, notamment un revêtement de chrome.

**7.** Palier à roulement selon l'une quelconque des revendications précédentes, **caractérisé en ce que** les premiers corps de roulement (4) sont montés entre la bague intérieure et la bague extérieure (2, 3) avec précontrainte.

**8.** Palier à roulement selon l'une quelconque des revendications précédentes, **caractérisé en ce que** les premiers corps de roulement (4) sont répartis uniformément sur la périphérie du palier à roulement (1).

**9.** Palier à roulement selon l'une quelconque des revendications précédentes, **caractérisé en ce qu'**au moins un deuxième corps de roulement (5) est disposé entre deux premiers corps de roulement (4).

**10.** Palier à roulement selon l'une quelconque des revendications précédentes, **caractérisé en ce que** d'autres corps de roulement sont prévus en plus des premiers et deuxièmes corps de roulement (4, 5), leurs diamètre étant inférieur au diamètre des deuxièmes corps de roulement (5).

**11.** Palier à roulement selon la revendication 10, **caractérisé en ce qu'**au moins un corps de roulement supplémentaire est disposé entre deux deuxièmes corps de roulement (5).

**12.** Palier à roulement selon l'une quelconque des revendications précédentes, **caractérisé en ce que** le revêtement (6) s'applique sur différents composants du palier à roulement (1) en couches d'épais-

seurs différentes (h).

## FIG. 1

## FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 407145820 A